# EUROPEAN PATENT APPLICATION

(11) **EP 4 738 189 A1**
(43) Date of publication of application: **06.05.2026**
(21) Application number: 24290037.1
(22) Date of filing: 30.10.2024
(51) Int. Cl.: G06K 19/077

(54) **CHIP CARD AS WELL AS MANUFACTURING METHOD AND CONSTRUCTION KIT FOR A CHIP CARD COMPRISING A FLEXIBLE PART**

(71) Applicant: Giesecke+Devrient ePayments GmbH, 81677 München (DE)
(72) Inventor: GILLE, Jean Philippe, 69290 Craponne (FR)
(74) Representative: LKGLOBAL Partnerschaftsgesellschaft mbB

(57) **Abstract**

The present invention relates to a chip card (1), in particular a transaction card, comprising a card body (2) holding a chip module (3) enabling electronic transactions, such as secure communications involving a trusted entity, the card body (2) having a main section (11), wherein the chip card (1) further comprises a flexible part (F) which is linked to the main section (11) and at least sectionwise has a higher elasticity than the main section (11), as well as to a method, and a construction kit (10) for manufacturing a corresponding chip card (1).

## Description

### Technical Field

The present disclosure relates to the field of chip cards or other portable data carriers comprising a card body carrying an electronic chip module. In particular, the present disclosure relates to a chip card, in particular a transaction card, comprising a card body holding a chip module enabling electronic transactions, such as secure communications involving a trusted entity, to a method of manufacturing a chip card, in particular a transaction card, and to a construction kit for a chip card, in particular a transaction card.

### Background of the Invention

Chip cards, also known as portable data carriers, are known from the state of the art and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction.

According to the prior art, card bodies of portable data carriers and security elements are usually made of relatively stiff plastic which can provide a relatively high stability and resistance of the card body against environmental influences while allowing for an implementation of a wide range of features as well as adaptations of the card body, for example by forming or embedding secure features in the plastic material. However, application of the card bodies and thus possible of the chip module they carry can be restricted in that their surface is restricted to the actual dimensions of the chip card. Furthermore, the stiffness of the card body may limit the application of the chip cards in that they keep their respective dimensions.

EP 1 429 283 B1, for example, relates to a chip card interface using interface contacts arranged on a contact strip formed from the card body. The interface is preferably a USB interface. The card body is made of multiple layers, the height and width of the layer structure being matched to the dimensions of the connector space of a USB socket located under complimentary contacts.

FR 2 798 209 A1 relates to a method for manufacturing smart cards that includes forming a sheet and fold line forming along the middle of the sheet. A chip and/or a cavity of a module is inserted in and/or applied to sheet. Adhesive is applied to a face of the sheet, the sheet is folded in half, pressed together and the adhesive activated so the sheet remains folded.

Chip cards known from the prior art may not satisfy all requirements regarding their range of possible applications. The prior art does not provide sufficient ways to extend the range of possible physical applications for chip cards. By contrast, the rigid nature of chip cards limits their applicability in terms of both, handling and functional versatility.

### Summary of the Invention

It may be seen as an object underlying the present invention to overcome above-mentioned limitations of chip cards known from the prior art. In particular, it may be seen as an object underlying the present invention to expand the applicability of chip cards, preferably regarding both, handling and functional versatility. These and further objects are at least partially achieved by the subject-matter of the independent claims.

According to an aspect, a chip card, in particular a transaction card, comprising a card body holding a chip module enabling electronic transactions, such as secure communications involving a trusted entity, is provided, the card body having a main section, wherein the chip card further comprises a flexible part which is linked to the main section and at least sectionwise has a higher elasticity than the main section

According to an aspect, a method of manufacturing a chip card, in particular a transaction card, is provided, the method comprising the steps of providing a card body configured to hold a chip module enabling electronic transactions, such as secure communications involving a trusted entity, the card body having a main section; linking the main section to a flexible part which at least sectionwise has a higher elasticity than the main section, and electrically connecting the main section and the flexible part to each other.

According to an aspect, a construction kit for a chip card, in particular a transaction card, is provided, the construction kit comprising a card body configured to hold a chip module (3) enabling electronic transactions, such as secure communications involving a trusted entity, the card body having a main section, the construction kit further comprising a flexible part at least sectionwise has a higher elasticity than the main section, and means for electrically connecting the main section and an flexible part to each other.

The proposed solution allows for providing extendible card bodies. Thereby, chip cards can be provided which on the one hand can meet certain industry requirements regarding functional reliability and security, and which on the other hand are highly customisable and adaptable, thus allowing to expand the applicability of chip cards regarding both, handling and functional versatility. Yet, the card body can be compliant to a specific standardisation and/or regulation, such as an ISO-format, for example as ISO-ID-1 card defined as a Physical Supports according to the ISO 7810 specification.

The proposed solution has the advantage over the prior art that it enables to provide secure and mechanically flexible electronic applications as increasingly demanded, for example, by the communication industry, including the medical field. Deformable properties are in demand for foldable and stretchable devices, which include light-emitting diodes, batteries, artificial electronic skin (E-skin), supercapacitors, sensors, transistors, electrochromic devices (ECDs), antenna and more. The Smart Card industry can benefit of the evolution of foldable, elastic and/or stretchable materials to add more functionality and to enhance security features. Standard solutions for incorporating foldable, elastic, and/or stretchable material for Smart Cards can be provided to extend their functionalities and connectivity.

Further developments can be derived from the dependent claims and from the following description. Features described with reference to a card body, chip card, and/or construction kit, as well as components thereof, may be implemented as method steps, or vice versa. Therefore, the description provided in the context of the card body, chip card, and/or construction kit applies in an analogous manner also to respective methods. In particular, features and functions of the card body, chip card, and/or construction kit, as well as any of their elements and components, may be implemented as method steps which in turn may be implemented as respective device features or functions.

According to a possible embodiment, the chip module is provided at the main section. The main section can remain relatively rigid and/or compliant to certain standards, such as respective standards issued by the ISO. This further helps in providing standardized for incorporating foldable, elastic, and/or stretchable material for Smart Cards can be provided to extend their functionalities and connectivity.

According to a possible embodiment, the flexible part is electrically connected to the chip module. Thereby, any electronic capabilities of the chip module, such as data storage and/or processing, or alike, can be made available to handle any data acquired by and/or sent to the extension section. This helps in providing chip cards which on the one hand can meet certain industry requirements regarding functional reliability and security, and which on the other hand are highly customisable and adaptable, thus enabling to expand the applicability of chip cards regarding both, handling and functional versatility.

According to a possible embodiment, the chip card further comprises an electronic device, such as a microchip, a keypad, a display, a sensor module, an interface module and/or a photovoltaic module. The respective electronic device can help to expand the functional spectrum and provide additionally extended ways to handle or operate the chip card. Thereby, in particular customisability and adaptability of chip cards may be enhanced, thus allowing to expand the applicability of chip cards regarding both, handling and functional versatility.

According to a possible embodiment, the chip card further comprises and/or provides a physiological module, such as a sensor arrangement and/or medical interface configured to acquire at least one physiological parameter of a living being. The physiological module can include electronic skin, stretchable sensors, wearables, secured drug delivery, as well as related data, including ECG (electrocardiogram) and EMG (electromyogram). Thereby, the applicability of chip cards may be expanded to respective medical-related functionalities.

According to a possible embodiment, the electronic device and/or the physiological module are or is, respectively, arranged at main section and/or the flexible part. The respective electronic device and/or physiological module can make use of the main section and/or the extension section. This particularly allows to enlarge room or at least surface area which can be occupied by the electronic device which can provide the physiological module in making use of the chip module in connection with data acquired from and/provided to any electronic device, sensor module, interface module, transceiver module, electronic element and/or antenna element. Thereby, customisability and adaptability of chip cards may be further enhanced, thus enabling to expand the applicability of chip cards regarding both, handling and functional versatility while not compromising security of physiological data involved.

According to a possible embodiment, the flexible part extends a usable surface area of the card body. Thereby, any surface area required or available for certain applications, such as on the one hand, electronic devices and/or physiological modules, and on the other hand optical and/or haptic elements, such as prints, or alike, can be increased. This further allows to enhance, customisability and adaptability of chip cards, thus enabling to expand the applicability of chip cards regarding both, handling and functional versatility.

According to a possible embodiment, the flexible part is provided as an elastic layer. The main section can be connected to the flexible part via the hinge section. Providing the flexible part is elastic layer achieved by performing a respective inner layer made of elastic material which may further serve as a hinge section. This additionally allows to enhance, customisability and adaptability of chip cards, thus enabling to expand the applicability of chip cards regarding both, handling and functional versatility.

According to a possible embodiment, the flexible part comprises at least one electrical conductor. The at least one electrical conductor may be guided along and/or within the flexible part. This can further help in facilitating the manufacturing of chip cards involving flexible parts, and to increase the technical reliability.

According to a possible embodiment, the flexible part at least partly closes a cavity formed in the card body. Thereby, the flexible part may be elastically deflected into the cavity. This can further allow to enhance, customisability and adaptability of chip cards, thus enabling to expand the applicability of chip cards regarding both, handling and functional versatility.

According to a possible embodiment, the hinge section is at least in part formed of a stretchable material, such as a silicone-based elastomer. The respective elastic material should be particularly suited for providing stretchable properties and at the at the same time resistant and/or durable properties, such as heat resistance, or alike. In particular, the material should be chemical and/or water resistant, while at the same time allowing to apply prints or alike. Furthermore, the material should provide efficient and reliable manufacturing properties, such as bonding capabilities. This can further help and facilitating the manufacturing of chip cards with relatively high technical reliability without compromising their customisability.

According to a possible embodiment, the chip module comprises a secure element. The secure element can be issued by a trusted entity. The secure element can help in providing secure communication and/or transactions which may include any data acquired from and/or sent to the extension section. This further helps in providing chip cards which on the one hand can meet certain industry requirements regarding functional reliability and security, and which on the other hand are highly customisable and adaptable, thus enabling to expand the applicability of chip cards regarding both, handling and functional versatility.

According to a possible embodiment, the secure element is configured to encrypt data held on the chip module and/or acquired from the flexible part. The secure element can thereby further help in providing secure communication and/or transactions which may include any data acquired from and/or sent to the flexible part. This additionally helps in providing chip cards which on the one hand can meet certain industry requirements regarding functional reliability and security, and which on the other hand are highly customisable and adaptable, thus enabling to expand the applicability of chip cards regarding both, handling and functional versatility in a safe and reliable way.

According to an additional or alternative solution, a chip card, in particular a transaction card, comprising a card body holding a chip module enabling electronic transactions, such as secure communications involving a trusted entity, is provided, the card body having a main section and an extension section, wherein the chip card further comprises a hinge section linking the main section to the extension section in a foldable manner, and wherein the main section and an extension section are electrically connected to each other.

According to an aspect, a method of manufacturing a chip card, in particular a transaction card, is provided, the method comprising the steps of providing a card body configured to hold a chip module enabling electronic transactions, such as secure communications involving a trusted entity, the card body having a main section and an extension section, linking the main section to the extension section in a foldable manner by means of a hinge section, and electrically connecting the main section and the extension section to each other.

According to an aspect, a construction kit for a chip card, in particular a transaction card, is provided, the construction kit comprising a card body configured to hold a chip module enabling electronic transactions, such as secure communications involving a trusted entity, the card body having a main section and an extension section, the construction kit further comprising a hinge section for connecting the main section to the extension section in a foldable manner, and means for electrically connecting the main section and the extension section to each other.

According to a possible embodiment, the chip module is provided at the main section. The main section can remain relatively rigid and/or compliant to certain standards, such as respective standards issued by the ISO. This further helps in providing standardized for incorporating foldable, elastic, and/or stretchable material for Smart Cards can be provided to extend their functionalities and connectivity.

According to a possible embodiment, the extension section is electrically connected to the chip module. Thereby, any electronic capabilities of the chip module, such as data storage and/or processing, or alike, can be made available to handle any data acquired by and/or sent to the extension section. This helps in providing chip cards which on the one hand can meet certain industry requirements regarding functional reliability and security, and which on the other hand are highly customisable and adaptable, thus enabling to expand the applicability of chip cards regarding both, handling and functional versatility.

According to a possible embodiment, the chip card further comprises an electronic device, such as a microchip, a keypad, a display, a sensor module, an interface module and/or a photovoltaic module. The respective electronic device can help to expand the functional spectrum and provide additionally extended ways to handle or operate the chip card. Thereby, in particular customisability and adaptability of chip cards may be enhanced, thus allowing to expand the applicability of chip cards regarding both, handling and functional versatility.

According to a possible embodiment, the chip card further comprises an energy storage device, such as an electrical battery and/or capacitator. Such an energy storage device may help to increase electrical power available to the chip module as less or any electronic device. Providing the energy storage device and thus helps in further enhancing customisability and adaptability of chip cards, thus enabling to expand the applicability of chip cards regarding both, handling and functional versatility.

According to a possible embodiment, the electronic device and/or the energy storage device are or is, respectively, arranged at main section and/or the extension section. The respective electronic device and/or energy storage device can make use of the main section and/or the extension section. This particularly allows to enlarge room or at least surface area which can be occupied by the electronic device. Thereby, customisability and adaptability of chip cards may be further enhanced, thus enabling to expand the applicability of chip cards regarding both, handling and functional versatility.

According to a possible embodiment, the extension section extends a usable surface area of the card body. Thereby, any surface area required or available for certain applications, such as on the one hand, electronic devices and/or energy storage devices, and on the other hand optical and/or haptic elements, such as prints, or alike, can be increased. This further allows to enhance, customisability and adaptability of chip cards, thus enabling to expand the applicability of chip cards regarding both, handling and functional versatility.

According to a possible embodiment, the main section is electrically connected to the extension section via the hinge section. The hinge section can be designed and arranged such that the main section and at least one extension section of the chip card can be moved with respect to each other, and particularly folded, in a reliable and reproducible way while providing the electrical connection therebetween. This helps in facilitating the manufacturing of chip cards, and to increase the technical reliability.

According to a possible embodiment, the hinge section comprises at least one electrical conductor for electrically connecting the main section to the extension section. The at least one electrical conductor may be guided along and/or within the hinge section. This can further help in facilitating the manufacturing of chip cards, and to increase the technical reliability.

According to a possible embodiment, the hinge section comprises and/or is provided as a film hinge. Any electrical conductors can be guided through and/or encapsulated within the film hinge. This can additionally help in facilitating the manufacturing of chip cards, and to increase the technical reliability.

According to a possible embodiment, the hinge section is at least in part formed of a flexible plastic material, such as Teslin. The respective plastic material should be particularly suited for providing foldable and/or flexible and at the at the same time resistant and/or durable properties, such as heat resistance, or alike. In particular, the material should be chemical and/or water resistant, while at the same time allowing to apply prints or alike. Furthermore, the material should provide efficient and reliable manufacturing properties, such as bonding capabilities. This can further help and facilitating the manufacturing of chip cards with relatively high technical reliability without compromising their customisability.

According to a possible embodiment, the chip module comprises a secure element. The secure element can be issued by a trusted entity. The secure element can help in providing secure communication and/or transactions which may include any data acquired from and/or sent to the extension section. This further helps in providing chip cards which on the one hand can meet certain industry requirements regarding functional reliability and security, and which on the other hand are highly customisable and adaptable, thus enabling to expand the applicability of chip cards regarding both, handling and functional versatility.

According to a possible embodiment, the secure element is configured to encrypt data held on the chip module and/or acquired from the extension section. The secure element can thereby further help in providing secure communication and/or transactions which may include any data acquired from and/or sent to the extension section. This additionally helps in providing chip cards which on the one hand can meet certain industry requirements regarding functional reliability and security, and which on the other hand are highly customisable and adaptable, thus enabling to expand the applicability of chip cards regarding both, handling and functional versatility in a safe and reliable way.

### Brief Description of the Drawings

- Fig. 1: is a schematic top view of an exemplary embodiment of a chip card having a main section and an extension section in an unfolded position.
- Fig. 2: is a schematic top view of a further exemplary embodiment of a chip card having a main section and an extension section in a folded position.
- Fig. 3: is a schematic top view of the exemplary embodiment of the chip card shown in Fig. 2 in an unfolded position.
- Fig. 4: is a schematic top view of another exemplary embodiment of a chip card having a main section and an extension section in an unfolded position.
- Fig. 5: is a schematic top view of an additional exemplary embodiment of a chip card having a main section and an extension section in an unfolded position.
- Fig. 6: is a schematic top view of a further additional exemplary embodiment of a chip card having a main section and an extension section in an unfolded position.
- Fig. 7: is a schematic cross-sectional view of the chip card along a cross-sectional line A-A depicted in Fig. 1 in an unfolded position.
- Fig. 8: is a schematic cross-sectional view of the chip card along a cross-sectional line A-A depicted in Fig. 1 in the folded position.
- Fig. 9: is a schematic top view of an exemplary embodiment of an inner layer of the chip card shown in Fig. 1.
- Fig. 10: is a schematic cross-sectional view of the chip card shown in Figs. 2 and 3 along a cross-sectional line B-B depicted in Fig. 2 in a folded position.
- Fig. 11: is a schematic cross-sectional view of the chip card shown in Figs. 2 and 3 along a cross-sectional line B-B depicted in Fig. 2 in an unfolded position.
- Fig. 12: is a schematic top view of an exemplary embodiment of an inner layer of the chip card shown in Figs. 2 and 3.
- Fig. 13: is a cross-sectional view of an exemplary embodiment of a chip card comprising a flexible part.
- Fig. 14: is a cross-sectional view of a further exemplary embodiment of a chip card comprising a flexible part.
- Fig. 15: is a cross-sectional view of another exemplary embodiment of a chip card comprising a flexible part.
- Fig. 16: is a schematic illustration of steps of a method for manufacturing a chip card.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a synoptic review of the illustrations together with a review of the detailed description that follows.

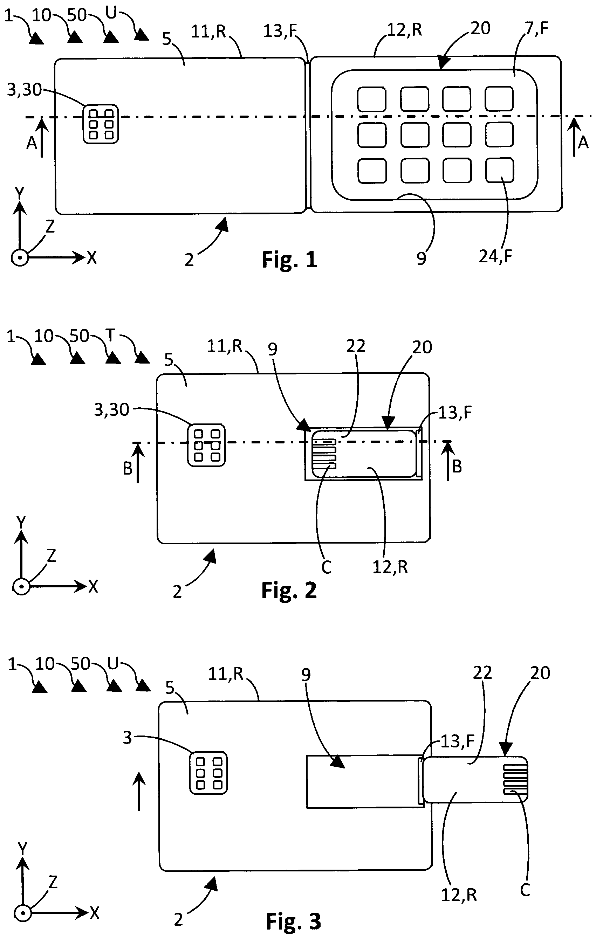

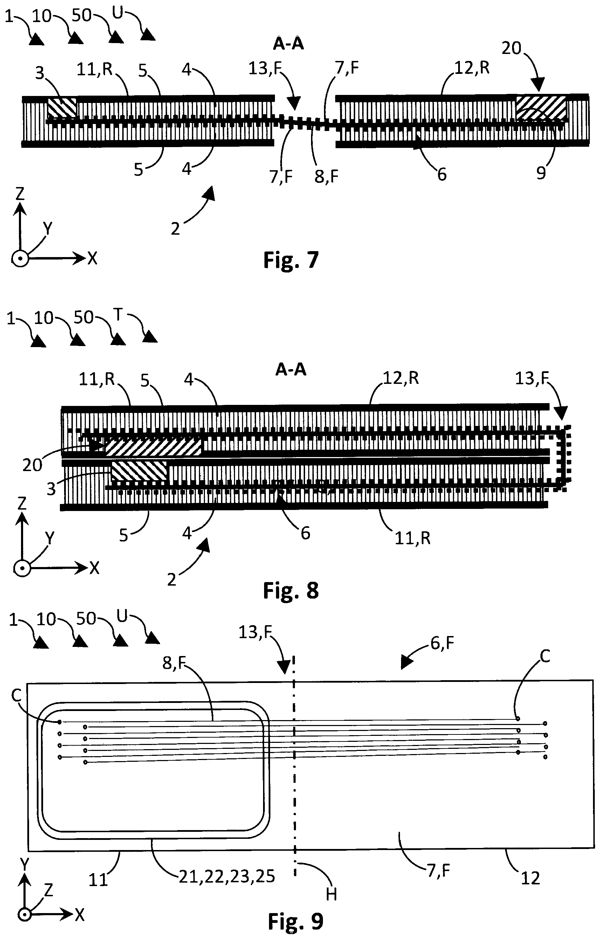

Fig. 1 shows a schematic top view of a chip card 1 having a card body 2 and a chip module 3. The chip card 1 extends in a longitudinal direction X, a transverse direction Y, and a height direction Z, together forming a Cartesian coordinate system. The card body comprises at least one core layer 4 (see Figs. 7, 8, 10, 11, and 13 to 15) an outer layer 5 and/or an inner layer 6 which can be provided as rigid parts R having a certain elasticity.

Furthermore, flexible parts F may be provided having a higher elasticity than the rigid parts R. For example, such flexible parts F may be provided as elastic layers 7, which can comprise electrical conductors 8 (see Figs. 7 to 15). The layers and parts may be formed as and/or arranged in cavities 9 and/or respective cut-outs provided at the chip card 1.

Each of the layers, parts, components and/or elements of the chip card may be provided in the form of a construction kit 10 for a chip card 1. Such a construction kit 10 may comprise card bodies 2, chip modules 3, core layers 4, outer layers 5, inner layers 6, elastic layers 7, electrical conductors 8 and/or cavities 9 in any form and number required for providing the chip card 1 with main sections 11, extension sections 12, and/or hinge sections 13 which may comprise electronic devices 20, sensor modules 21, interface modules 22, transceiver modules 23, such as an antenna, respective electronic elements 24, secure elements 30 (possibly as a part of the chip module and/or or at least connected thereto) and/or energy storage devices 40 in any form a number required by an intended application of the chip card 1, including the application as a physiological module 50 which may be used to acquire and/or transmit data relating to human body or any other living being.

In the present example, the chip card 1 has a card body 2 which is divided into a main section 11 and an extension section 12 which are connected to each other via a hinge section 13. The main section 11 and the extension section 12 can be provided as rigid parts R, whereas the hinge section 13 can be provided as a flexible part F which may connect the main section 11 to the extension section 12 along respective transverse sides thereof extending essentially in parallel to the transverse direction Y. The main section 11 can hold the chip module 3.

The extension section 12 can hold an electronic device 20, for example, a keyboard which can have electronic elements 25 in the form of electronic keys which are made accessible and an unfolded position U of the chip card 1 illustrated in Fig. 1, where the main section 11 and the extension section 12 are at least in part folded away from each other by their respective relative movement around the hinge section 13 providing a hinge axis H (see Fig. 9) running essentially in parallel to the transverse direction Y. The electronic device 20 can be arranged in a respective cavity 9 formed and the extension section 12 and maybe cover it by an elastic layer 7. Thereby, at least the upper surfaces of the electronic elements 24 in the form of keys may be provided as a flexible parts F such that they can be actuated by being pressed down by a user.

Fig. 2 shows a schematic top view of a further exemplary embodiment of a chip card 1 having a main section 11 and an extension section 12 in a folded position T. In the present example, the extension section 12 is arranged in a cavity 9 formed in the main section 11 and attached to the main section via the hinge section 13 provided as a flexible part F extending along a transverse edge of the cavity 9. The extension section 12 can comprise an, for example providing an interface module 22, such as an USB device which can provide respective connectivity to the chip module 3 and/or any further data storage (not shown), and therefore is provided with respective contact surfaces C.

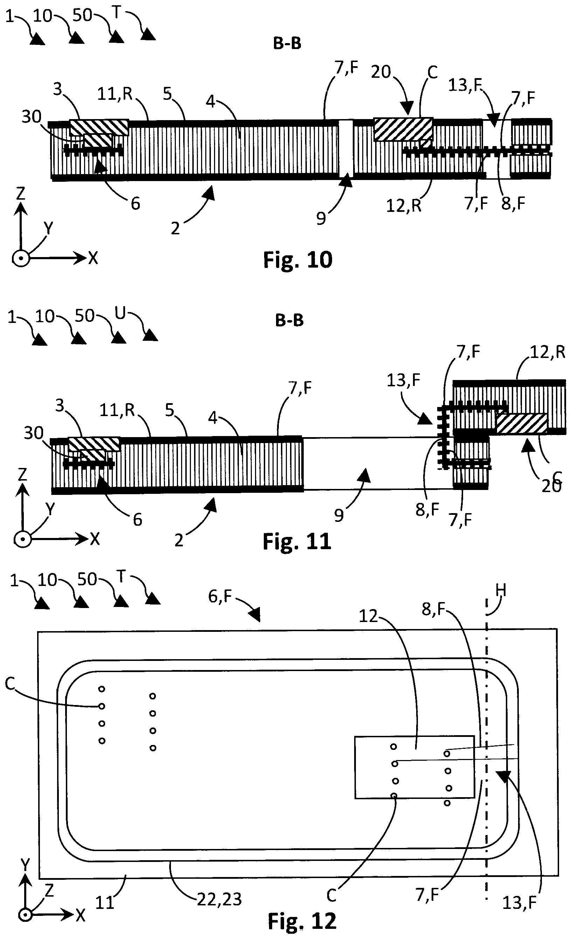

Fig. 3 shows a schematic top view of the exemplary embodiment of the chip card shown in Fig. 2 in an unfolded position. In the present example, the extension section 12 is moved out of the cavity 9 formed in the main section 11 by being folded away from the main section 11. For example, the extension section 12 is again folded away from the main section 11 by a relative movement with respect to the Main section 11 around the hinge section 13 providing a hinge axis H (see Fig. 12) running essentially in parallel to the transverse direction Y. Thus, the extension section 12 with the contact surfaces C for the interface module 22 can now be inserted into a socket providing respective connectivity.

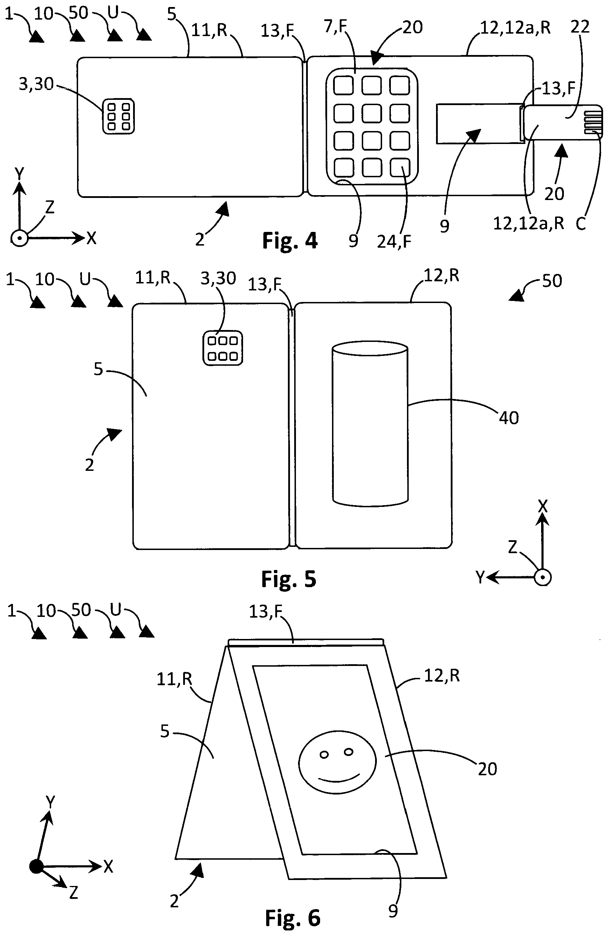

Fig. 4 shows a schematic top view of another exemplary embodiment of a chip card 1 having a main section and an extension section in an unfolded position U. In the present example, the extension section 12 is provided as first extension section 12a and a further extension section 13b. The first extension section 12a can be attached to the main section 11 in a similar manner as described above with reference to the embodiment of the chip card 1 shown in Fig. 1. The first extension section 12a may serve as a main section 11 for the second extension section 12b which may be attached to the first extension section 12a in a manner as described with reference to Figs. 2 and 3 above.

Consequently, the first extension section 12a and the second extension section 12b may be provided with respective electronic devices 20 each. In the present example, the electronic device 20 held by the first extension section 12a can again be embodied as a keypad with respective keys as electronic elements 25. The second extension section 12b can again comprise an interface module 22, such as a USB module with respective contact surfaces C which may serve for electric contacting the addict device 20 held by the first extension section 12a and/or the chip module 3 held by the main section 11.

Fig. 5 shows a schematic top view of an additional exemplary embodiment of a chip card 1 having a main section 11 and an extension section 12 in an unfolded position U. In the present example, the main section 11 and the extension section 12 are connected to each other via a hinge section 13 provided at respective longitudinal sides of the main section 11 and the extension section 12 extending essentially in parallel to the longitudinal direction X, thus providing a hinge axis H running essentially in parallel to the longitudinal direction X allowing to fold away the main section 11 and the extension section from each other. The extension section 12 holds an energy storage device 40 which can be electrically connected to the chip module 3 and/or any other electronic device 20 of the chip card 1.

Fig. 6 shows a schematic top view of a further additional exemplary embodiment of a chip card having a main section 11 and an extension section 12 in an unfolded position U. In the present example, the extension section 12 comprises an electronic device 20 in the form of an electronic display which can be held within a respective cavity 9 formed at the extension section. In the unfolded position U the main section 11 and the extension section 12 may be folded away from each other around a hinge axis H again provided along a hinge section 13 extending along transverse sides thereof, such that the chip card 1 may rest upon a surface, such as a tabletop (not shown), on transverse side faces of the main section 11 and the extension section 12 facing away from the hinge section 13 and thus allow a user to view the display without holding the chip card 1 by hand.

Fig. 7 shows a schematic cross-sectional view of the chip card 1 along a cross-sectional line A-A depicted in Fig. 1 in an unfolded position U. Here it becomes apparent that the hinge section 13 can be provided as an inner layer 6 are only which can comprise at least one elastic layer 7 (dotted line) and at least one electrical conductor 8, preferably provided as flexible parts F, which may form a film hinge in the region of the hinge section 13. In the present example, the electrical conductor 8 is embedded between two surrounding elastic layers 7 and extends from the chip module 3 to the electronic device 20 in order to provide an electrical connection therebetween.

Fig. 8 shows a schematic cross-sectional view of the chip card 1 along a cross-sectional line A-A depicted in Fig. 1 in the folded position T. Here it becomes apparent that in the folded position T, the extension section 12 may be folded onto the main section 12 such that they abut each other. An upper surface of the extension section 12 may be essentially aligned with an upper surface of the main section 11 at least partially provided by their respective outer layers 5.

Fig. 9 shows a schematic top view of an exemplary embodiment of an inner layer 6 of the chip card shown in Fig. 1. In the present example, the entire inner layer 6 can be provided as a flexible part F in order to enable to fold the card body 2 around the hinge axis H in the region of the hinge section 13. The elastic layers 6 can hold a number of electrical conductors 8 which may connect respective contact surfaces C provided at the side of the main section 11 to contact surfaces C provided at the side of the extension section 12 and to contact the chip module 3 and the electronic device 20 and/or energy storage device 40, respectively. Furthermore, the inner layer 6 may comprise a sensor module 21 or at least a part thereof, such as an antenna, which can alternatively or additionally be used as a part of an interface module 22 electrically connecting to the chip module 3 and/or the electronic device 20.

Fig. 10 shows a schematic cross-sectional view of the chip card 1 shown in Figs. 2 and 3 along a cross-sectional line B-B depicted in Fig. 2 in the folded position T. Here it becomes apparent that the chip card 1 may comprise an inner layer 6 extending at least partially through the main section 11 and the extension section 12 and electrically connecting the chip module 3 to the electronic device 21 while providing the hinge section 13 therebetween. Therefore, the inner layer 6 and/or hinge section 13 may again comprise elastic layers 7 holding respective electrical conductors 8 between them.

Fig. 11 shows a schematic cross-sectional view of the chip card 1 shown in Figs. 2 and 3 along a cross-sectional line B-B depicted in Fig. 2 in an unfolded position U. Here it becomes apparent that the extension section 12 can be moved out of the cavity 9 formed in the main section 11 by essentially rotating the extension section 12 hinge axis H provided by the hinge section 13. Furthermore, it becomes apparent that, for example, the secure element 30 may be provided below the chip module 3 and/or as a part thereof electrically connecting to the inner layer 6 and thus to the electronic device 20.

Fig. 12 shows a schematic top view of an exemplary embodiment of the inner layer 6 of the chip card shown in Figs. 2 and 3. In the present example, the entire inner layer 6 can again be provided as a flexible part F in order to enable to fold the card body 2 around the hinge axis H in the region of the hinge section 13. The elastic layers 6 can hold a number of electrical conductors 8 which may connect respective contact surfaces C provided at the side of the main section 11 to contact surfaces C provided at the side of the extension section 12 and to contact the chip module 3 and the electronic device 20 and/or energy storage device 40, respectively. Furthermore, the inner layer may an antenna element 25, which can used as a part of any sensor module 21, interface module 22 and/or transceiver module 23 electrically connecting to the chip module 3 and/or the electronic device 20.

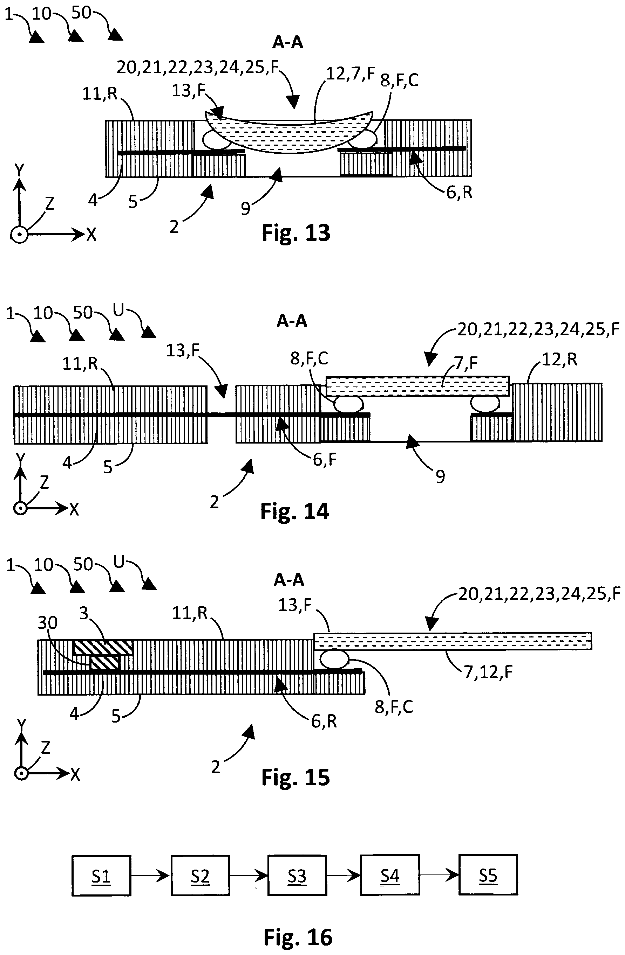

Fig. 13 shows a cross-sectional view of an exemplary embodiment of a chip card 1 comprising a flexible part F provided at the main section 11 and therefore possibly forming an extension section 12 attached to the main section 11 via respective hinge section 13. In the present example, the flexible part F can be provided as an electronic device 20, sensor module 21, interface module 22, transceiver module 23, electronic element 24 and/or antenna element 25 which can be electrically contacted via electrical conductors 8. In order to allow an elastic deflection of the flexible part F, the flexible part F can be provided as an elastic layer 7 which can be, for example, deflected into the cavity 9 formed in the card body 2. The electrical conductors 8 can at least in part be provided as flexible parts F with respective contact surfaces C for electrically contacting the flexible part F provided as an electronic device 20, sensor module 21, interface module 22, transceiver module 23, electronic element 24 and/or antenna element 25 in a flexible/or elastic manner.

Fig. 14 shows a cross-sectional view of a further exemplary embodiment of a chip card 1 comprising a flexible part F provided at the extension section 12 which can be connected to the main section via hinge section 13 as explained above. In the present example, the flexible part F can again be provided as an electronic device 20, sensor module 21, interface module 22, transceiver module 23, electronic element 24 and/or antenna element 25 which can be electrically contacted via electrical conductors 8. In order to allow an elastic deflection of the flexible part F, the flexible part F can be provided as an elastic layer 7 which can be, for example, deflected into the cavity 9 formed in the card body 2. The electrical conductors 8 can be least in part be provided as flexible parts F with respective contact surfaces C for electrically contacting the flexible part F provided as an electronic device 20, sensor module 21, interface module 22, transceiver module 23, electronic element 24 and/or antenna element 25 in a flexible/or elastic manner.

Fig. 15 shows a cross-sectional view of another exemplary embodiment of a chip card 1 comprising a flexible part F. In the present example, the flexible part F can comprise an elastic layer 7 providing the extension section 12 at least a part of which attached to the main section 11 can serve as a hinge section. The main section 11 can be connected to the extension section 12 via at least one electrical conductor 8 which can provide a contact surface C and may again be formed as a flexible part F as well. Thereby, such a flexible extension section 12 itself may provide an electronic device 20, sensor module 21, interface module 22, transceiver module 23, electronic element 24 and/or antenna element 25 which can be stretched away from the main section 11, for example, being pulled away from the main section direction essentially extending in parallel to the longitudinal direction X thereby enabling an extension of the entire card body 2 with respective increased surface area.

Fig. 16 shows a schematic illustration of steps S of a method for manufacturing a chip card 1 the sequence of which may be altered according to respective requirements. In a first step, elastic material for inner layers 6, elastic layers 7 and/or hinge sections 13, for example, for forming respective inlays and inlay protection material may be provided, for example comprising Teslin or alike. In a second step, respective inlays, for example core layers 4 and/or elastic layers 7 as well as related electrical conductors 8 and/or contact surfaces C may be manufactured including the provision and finishing of respective coper wire, pads, chemical etching, conductive inks which can be applied, e.g. by inkjet, 3 D printing, silkscreen, flip chip bonding. The respective inlay design should include any required hinge sections 13, electrical components connections, conductive adhesive, etc. Furthermore, any necessary soldering and/or insulating, including the manufacturing of chip lead frame bonds on core material can be provided.

In a third step, core printing and/or collation of the core layer 4 as well as bonding the main section 11 and the extension section 13 can be carried out. In a fourth step, punching tool and/or milling tool may be used for forming cavities 9 according to the expected formats of the sections and special components of the chip card 1 to be accommodated therein. For example, any removal of material can include removing core layers 4 and/or outer layers 5 to expose any inner layer 6, such as elastic layers 7 providing the hinge section 13. In a fifth step, if not provided before, electronic devices 20, sensor modules 21, interface modules 22, transceiver modules 23, electronic elements 24, and/or energy storage devices may be joined with the card body 2 by the use of adhesive, such as liquid adhesives and/or double layered adhesive tape, as well as any other glues, resins, including hot glue, or alike.

Any stretchable and/or flexible inlay may be bonded on an inlay providing a core layer 4, such as a smart Card Inlay. As adhesives, Silicone or Polyurethane or Acrylic based adhesive can be used on cleaned and rough inlay surfaces. Respective inlays and stretchable materials should therefore be aligned, pressed and cured. As materials, polymer paper (Teslin) can be used for inner layers 6 providing flexible parts F. Silicone elastomer can be used for stretchable flexible parts F with Silicon adhesive or Polyurethane with Polyurethane adhesive including cyanolicrate. As elastomers, polymers like Silicone, Polyurethane, and PDMS (polydimethylsiloxane) provide the necessary elasticity, while Silicone and Polyurethane provide excellent elongation at break properties. To connect contact surfaces C, such as electric pads to inlays and stretchable materials, conductive epoxy or silicon adhesive can be used. Furthermore, thin film TFTs, polymers like silicone, polyurethane, and PDMS (polydimethylsiloxane) can provide the necessary elasticity. Incorporating conductive materials, such as gold, silver nanowires, graphene, or carbon nanotubes into the elastomers enables to provide respective electrical functionality. Any printing technology or micro fabrication may be used as fabrication techniques.

Any of the elements of components of the chip card 1, as described above, in particular provided on and/or by extension sections 12 and/or respective flexible parts F comprising an electronic device 20, sensor module 21, interface module 22, transceiver module 23, electronic element 24 and/or antenna element 25 can be integrated into any security framework implemented by means of the chip module 3 and/or a secure element 30, in particular, as provided by respective trusted entity, and therefore can include electronic skin, stretchable sensors, wearables, secured drug delivery, as well as related data, including ECG (electrocardiogram) and EMG (electromyogram). Consequently, in conjunction, these components and/or elements can provide a Body Area Network Transactions Authentication along with respective certificates.

Several standard protocols and frameworks for Body Area Networks (BAN) or Wireless Body Area Networks (WBAN) can be made available that facilitate the communication between wearable devices, medical sensors, and other body-mounted devices to ensure reliable and secure data transfer. For example, any foldable and/or stretchable item can be combined with smart card security measures offered by the chip card 1 for user authentication and certification of acquired data methods. Respective functionalities which may be implemented by means of any of the chip card is 1 as described above, can relate to the security of wearables, electronic skin, and/or stretchable items which can be attached to the card pass data through contact or Cless smart cards get for authentication and security, in both directions secured at sensor level vs. actual communication level. Such functions may involve authenticating a user (e.g. through biometrics, skin impedance, etc) user data and/or certified data which can be received from respective electronic devices 20 including (stretchable) sensors and/or communications by NFC. Any of the electronic devices 20, including stretchable items can transmit Smart Card user authentication by, Body Coupled Communication (BCC) or Human Body Communication (HBC) which can be used by a receiving device, sensor instrument, drug delivery service, etc., to authenticate the user transmitted data by low frequency, magnetic resonance and/or capacitive coupling with may be added via respective extension sections 12.

Respective communication standards involved can relate to IEEE 802.15.6: Guidelines for shortrange, low-power wireless communication in and around the human body. Security mechanisms involved may implement robust security features to protect sensitive health data. Communication standards involved may further relate to Bluetooth Low Energy (BLE) suitable for periodic transmission of small amounts of data, typical in health monitoring applications, ZigBee, allowing for high-level communication protocols using low-power digital radios on Mesh Networking, ISO/IEEE 11073 providing standards for medical device communication ensuring interoperability, data format and protocols to Cloud, ANT+ Wireless protocol primarily used for sports and fitness sensors, allowing to implement a simple network topology for easy device pairing and data transfer, and/or NFC (Near Field Communication) Communication protocols that enable two electronic devices to communicate within a short range, which can be particularly suitable for passive devices that draw power from the secured communicating device to be connected to via respective interface modules 22 and/or transceiver modules 23, for example, by means of the antenna element 25.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### Reference Signs

- 1: data carrier / chip card
- 2: card body
- 3: chip module
- 4: core layer
- 5: outer layer
- 6: inner layer / inlay
- 7: elastic layer
- 8: electrical conductor
- 9: cavity / cut-out
- 10: construction kit
- 11: main section
- 12: extension section
- 12a: first extension section
- 12b: further extension section
- 13: hinge section

- 20: electronic device
- 21: sensor module
- 22: interface module
- 23: transceiver module/antenna
- 24: electronic element
- 25: antenna element

- 30: secure element

- 40: energy storage device

- 50: physiological module

- C: contact surface
- F: flexible part
- H: hinge axis
- R: rigid part
- S: step
- T: folded position
- U: unfolded position
- X: longitudinal direction
- Y: transverse direction
- Z: height direction

- S1: provide elastic material
- S2: manufacture inlay
- S3: printing, collation and/or bonding
- S4: form cavities
- S5: connect device

## Claims

1. Chip card (1), in particular a transaction card, comprising a card body (2) holding a chip module (3) enabling electronic transactions, such as secure communications involving a trusted entity, the card body (2) having a main section (11), wherein the chip card (1) further comprises a flexible part (F) which is linked to the main section (11) and at least sectionwise has a higher elasticity than the main section (11).

2. Chip card (1) according to claim 1, wherein the chip module (3) is provided at the main section (11).

3. Chip card (1) according to claim 1 or 2, wherein the flexible part (F) is electrically connected to the chip module (3).

4. Chip card (1) according to at least one of claims 1 to 3, wherein the chip card (1) further comprises an electronic device (20), such as a microchip, a keypad, a display, a sensor module, an interface module and/or a photovoltaic module.

5. Chip card (1) according to at least one of claim 1 to 4, wherein the chip card (1) further comprises and/or provides a physiological module (50), such as a sensor arrangement and/or medical interface configured to acquire at least one physiological parameter of a living being.

6. Chip card (1) according to claim 4 or 5, wherein the electronic device (20) and/or the physiological module (50) are or is, respectively, arranged at main section (11) and/or the flexible part (F).

7. Chip card (1) according to at least one of claims 1 to 6, wherein the flexible part (F) extends a usable surface area of the card body (2).

8. Chip card (1) according to at least one of claims 1 to 7, wherein the flexible part (F) is provided as an elastic layer (7).

9. Chip card (1) according to at least one of claims 1 to 8, wherein the flexible part (F) comprises at least one electrical conductor (8).

10. Chip card (1) according to at least one of claims 1 to 9, wherein the flexible part (F) at least partly closes a cavity (9) formed in the card body (2).

11. Chip card (1) according to at least one of claims 1 to 10, wherein the flexible part (F) is at least in part formed of a stretchable material, such as a silicone-based elastomer.

12. Chip card (1) according to at least one of claims 1 to 11, wherein the chip module (3) comprises a secure element (30).

13. Chip card (1) according to claim 12, wherein the secure element (30) is configured to encrypt data held on the chip module (3) and/or acquired from the flexible part (F).

14. Method of manufacturing a chip card (1), in particular a transaction card, the method comprising the steps of
- providing a card body (2) configured to hold a chip module (3) enabling electronic transactions, such as secure communications involving a trusted entity, the card body (2) having a main section (11);
- linking the main section (11) to a flexible part (F) which at least sectionwise has a higher elasticity than the main section (11); and
- electrically connecting the main section (11) and the flexible part (F) to each other.

15. Construction kit for a chip card (1), in particular a transaction card, the construction kit comprising a card body (2) configured to hold a chip module (3) enabling electronic transactions, such as secure communications involving a trusted entity, the card body (2) having a main section (11), the construction kit (10) further comprising a flexible part (F) at least sectionwise has a higher elasticity than the main section (11), and means for electrically connecting the main section (11) and an flexible part (F) to each other.
